# EUROPÄISCHE PATENTANMELDUNG

(11) **EP 2 657 515 A1**
(43) Veröffentlichungstag der Anmeldung: **30.10.2013**
(21) Anmeldenummer: 12165971.8
(22) Anmeldetag: 27.04.2012
(51) Int. Cl.: F03D 7/02, F03D 9/00

(54) **Windenergieanlage mit Pitchregelung**

(71) Anmelder: Moog Unna GmbH, 59423 Unna (DE)
(72) Erfinder: Rösmann, Tobias, 44263 Dortmund (DE); Lehmann, Felix Johan, 59174 Kamen (DE)

(57) **Zusammenfassung**

Die Erfindung betrifft eine Windenergieanlage (1) mit Pitchregelung, die mit einer oder mehreren Photovoltaikzellen (9) zur Energieversorgung der Pitchmotoren (7) ausgestattet ist, eine drehbare Komponente (4, 5, 6) der Windenergieanlage (1), die mit einer oder mehreren Photovoltaikzellen (9) zur Energieversorgung der Pitchmotoren (7) ausgestattet ist, sowie ein Verfahren zum Betreiben einer solchen Windenergieanlage (1). Die Windenergieanlage (1) umfasst einen Turm (3), eine drehbar auf dem Turm (3) angeordnete Gondel (4), einen an der Gondel (4) drehbar befestigten Rotor mit Nabe (5) und mindestens ein in der Nabe (5) gehaltertes Rotorblatt (6), das im Wind (W) einen vom Anstellwinkel zum Wind (W) abhängigen Auftrieb zum Drehen des Rotors besitzt, wobei jedes Rotorblatt (6) um seine Längsachse (DRB) drehbar in der Nabe (5) gelagert ist und der Anstellwinkels jedes Rotorblatts (6) relativ zum Wind (W) jeweils mittels eines in der Nabe oder im Rotorblatt angeordneten Pitchmotors (7) eingestellt werden kann, wobei der Pitchmotor (7) aus einem oder mehreren Energiespeichern (8) mit elektrischer Energie vorsorgt werden kann und mindestens eine der drehbaren Komponenten (4, 5, 6) mit einer oder mehreren Photovoltaikzellen (9) ausgestattet ist, die so mit mindestens einem der Energiespeicher (8) verbunden sind, dass die eine oder mehreren Photovoltaikzellen (9) zumindest den Energiespeicher (8) für den Pitchmotor (7) mit elektrischer Energie versorgen können, und stellt damit eine kosten- und wartungsgünstige Windenregieanlage dar, die eine kompakte Anordnung von Energiespeicher und Pitchmotoren ermöglicht und die die Pitchmotoren selbst nach langer Standzeit des Rotors mit der notwendigen Energie zur Verstellung des Anstellwinkels der Rotorblätter versorgen kann.

## Beschreibung

### Gebiet der Erfindung

Die Erfindung bezieht sich auf eine Windenergieanlage mit Pitchregelung, die mit einer oder mehreren Photovoltaikzellen zur Energieversorgung der Pitchmotoren ausgestattet ist, auf eine drehbare Komponente der Windenergieanlage, die mit einer oder mehreren Photovoltaikzellen zur Energieversorgung der Pitchmotoren ausgestattet ist, sowie auf ein Verfahren zum Betreiben einer solchen Windenergieanlage.

### Hintergrund der Erfindung

Windenergieanlagen wandeln mit ihren Rotoren die Windenergie in elektrische Energie zur Einspeisung in ein Stromnetz um. Die Rotoren besitzen dazu mindestens ein Rotorblatt, wobei die meisten Windenergieanlagen einen Rotor mit jeweils drei Rotorblättern besitzen. Eine Windenergieanlage besteht im Wesentlichen aus einem Rotor mit Nabe und Rotorblättern sowie einer Maschinengondel, die den Generator und häufig ein Getriebe beherbergt. Die Gondel ist drehbar auf einem Turm gelagert, dessen Fundament die notwendige Standsicherheit gibt. Je nach Windrichtung wird die Gondel so in den Wind gedreht, dass entsprechend viel Windenergie über die Drehung des Rotors im Generator in elektrische Energie umgewandelt werden kann.

Die Windenergieanlagen werden von einer Regelelektronik bei ertragsversprechenden Windgeschwindigkeiten größer einer Anlaufgeschwindigkeit angefahren und bei zu großen Windgeschwindigkeiten größer einer Abschaltgeschwindigkeit wieder abgeschaltet. Die Windgeschwindigkeit kann dabei von der Steuerung über ein Anemometer ermittelt oder aus der Drehzahl des Rotors und der abgegebenen Leistung abgeleitet werden. Eine Abschaltung der Windenergieanlagen kann auch durch einen fehlenden Netzanschluss bzw. durch eine Netzstörung verursacht werden. Sogenannte pitchgeregelte Windenergieanlagen stellen heute den Stand der Technik dar. Das Drehen der Rotorblätter in den bzw. aus dem Wind wird dabei "Pitchen" genannt. Damit die Rotorblätter gedreht werden können, sind diese in der Nabe drehbar gelagert und werden von einem Pitchmotor in die gewünschte Stellung gedreht. Die Rotorblätter besitzen dabei je nach Anstellwinkel zum Wind einen größeren oder kleineren Auftrieb, der den Rotor in Drehung versetzt. Durch eine Pitchregelung kann der Rotor auch angehalten werden, indem die Rotorblätter in eine Position gedreht werden, die den Rotor auch bei Wind bis zum Stillstand abbremst. Soll der Rotor im Stillstand verweilen, wird der Anstellwinkel der Rotorblätter so gewählt, dass die Rotorblätter keinen Auftrieb durch den Wind erfahren. Solange die Windenergieanlage elektrische Energie erzeugt, kann sie selbständig die Pitchmotoren mit Energie versorgen. Problematisch ist es allerdings, wenn die Windenergieanlage vom Netz genommen wird. In diesem Fall wird der Anstellwinkel der Rotorblätter so verstellt, dass die Windenergieanlage keine elektrische Energie erzeugt. Damit ist eine Rückstellung der Rotorblätter in den Wind allerdings wegen des fehlenden Windes nicht mehr möglich. Damit Windenergieanlagen dennoch von einem Ruhebetrieb (Betrieb, bei dem keine elektrische Energie aus der Windenergie erzeugt wird) in den Windbetrieb (Erzeugung elektrischer Energie aus der Windenergie) geschaltet werden kann, müssen die Pitchmotoren weiterhin mit Energie versorgt werden. Die Druckschrift EP 1 961 957 A2 beschreibt dafür zwei Betriebsarten, eine erste Betriebsart zur Einspeisung von elektrischer Energie aus Windenergie in das angeschlossene Stromnetz und eine zweite Betriebsart mit geänderten Anstellwinkeln der Rotorblätter, die so eingestellt werden, dass die Windenergieanlage mit ihrem Generator gerade so viel Energie erzeugt, die notwendig ist, um zumindest die Pitchmotoren für einen Übergang in die erste Betriebsart zu betreiben. Diese Lösung ist allerdings nicht verwendbar für Windenergieanlagen, die nach längeren Stillständen des Rotors erneut angefahren werden sollen, da ohne Rotordrehung der Generator nicht die Energie für die Pitchmotoren bereitstellen kann und ohne Drehung der Rotorflächen der Rotor nicht in Rotation gebracht und somit keine Energie erzeugt werden kann.

Dokument EP 2 146 095 löst dieses Problem durch die Verwendung von Batterien zur Bereitstellung einer für den Betrieb der Pitchmotoren ausreichenden Menge an Energie. Dazu wird eine aufladbare Batterie mit einer Speicherkapazität von 15 kWh vorgeschlagen. Eine solche Batterie speichert wesentlich mehr Energie, als für den einmaligen Betrieb der Pitchmotoren notwendig ist. Entsprechend ist die Batterie groß, schwer und teuer in der Instandhaltung. Zur Vermeidung von Schleifkontakten werden Batterien gewöhnlich mit den Pitchmotoren mitrotierend in der Nabe angeordnet. Der in der Nabe zur Verfügung stehende Platz ist allerdings begrenzt, weshalb gewöhnlich kleine Batterien eingesetzt werden, die zusätzlich den Instandhaltungsaufwand und die Kosten für einen Batterieaustausch verringern. Die Verwendung von solch kleinen Batterien mit entsprechender kleiner Speicherkapazität ist aber problematisch, da diese sich über die Zeit selbst entladen und nach längeren Stillständen, beispielsweise bei Windflauten, lang anhaltenden Starkwinden oder längeren Netzausfällen, nicht mehr die notwendige Energie für eine Drehung der Rotorflächen in den Wind hinein für die Pitchmotoren zur Verfügung stellen können.

### Zusammenfassung der Erfindung

Es ist eine Aufgabe der vorliegenden Erfindung, eine kosten- und wartungsgünstige Windenergieanlage und entsprechende Komponenten der Windenergieanlage zur Verfügung zu stellen, die eine kompakte Anordnung von Energiespeicher und Pitchmotoren ermöglicht und die die Pitchmotoren selbst nach langer Standzeit des Rotors mit der notwendigen Energie zur Verstellung des Anstellwinkels der Rotorblätter versorgen kann.

Diese Aufgabe wird gelöst durch eine Windenergieanlage mit Pitchregelung aus mehreren Komponenten umfassend einen Turm, eine drehbar auf dem Turm angeordnete Gondel, einen an der Gondel drehbar befestigten Rotor mit Nabe und mindestens ein in der Nabe gehaltertes Rotorblatt, das im Wind einen vom Anstellwinkel zum Wind abhängigen Auftrieb zum Drehen des Rotors besitzen, wobei jedes Rotorblatt um seine Längsachse drehbar in der Nabe gelagert ist und der Anstellwinkels jedes Rotorblatts relativ zum Wind jeweils mittels eines in der Nabe oder im Rotorblatt angeordneten Pitchmotors eingestellt werden kann, wobei der Pitchmotor aus einem oder mehreren Energiespeichern mit elektrischer Energie vorsorgt werden kann und mindestens eine der drehbaren Komponenten mit einer oder mehreren Photovoltaikzellen ausgestattet ist, die so mit mindestens einem der Energiespeicher verbunden sind, dass die ein oder mehreren Photovoltaikzellen zumindest den Energiespeicher für den Pitchmotor mit elektrischer Energie versorgen können.

Eine Windenergieanlage (oder auch Windkraftanlage) wandelt die Energie des Windes in elektrische Energie um und speist sie gewöhnlich in ein angeschlossenes Stromnetz ein. Windenergieanlagen können dabei an Land oder als sogenannte Offshore-Anlagen im Bereich moderater Wassertiefen vor der Küste angeordnet werden. Windenergieanlagen an Land liefern typischerweise bis zu 3MW an elektrischer Energie, sogenannte Offshore-Anlagen können dagegen bis zu 6MW an elektrischer Energie liefern, da sie aufgrund der gegenüber dem Landbetrieb geringeren Restriktionen bzgl. Höhe und Rotorgröße und des höheren Windangebots größer beziehungsweise leistungsstärker sein können. Dafür ist der Wartungsaufwand für Offshore-Anlagen aufgrund ihrer erschwerten Erreichbarkeit höher. Gerade für solche Windenergieanlagen ist ein Betrieb mit möglichst geringem Wartungsaufwand wichtig. Windenergieanlagen können ein einzelnes Rotorblatt oder mehrere Rotorblätter beispielsweise zwei, drei oder vier Rotorblätter umfassen. Typischerweise umfassen Windenergieanlagen drei Rotorblätter, da hier die Lagerung der Nabe und des Rotors am günstigsten zu gestalten ist.

Eine Windenergieanlage umfasst dabei einen Turm zur Halterung der drehbaren Komponenten. Die minimale Höhe des Turms wird unter anderem vom Rotordurchmesser bestimmt. Als Rotordurchmesser wird dabei der Durchmesser der Fläche bezeichnet, innerhalb der die Rotorblätter im Wind rotieren. Windenergieanlagen können sehr unterschiedliche Rotordurchmesser bis mehr als 120m besitzen. Aufgrund der lokalen Windströmungen liefern Anlagen an Land mit höheren Türmen zudem höhere Energien im Vergleich zu Landanlegen mit kleineren Türmen. Auf dem Turm ist eine Gondel drehbar gelagert, wobei die Drehachse der Gondel (Gondel-Drehachse) in der Regel senkrecht zur Erdoberfläche steht. In der Gondel ist der Rotor mit Nabe und Rotorblättern gelagert und mit einem Generator zur Stromerzeugung verbunden. Die Gondel wird daher auch als Maschinengondel bezeichnet. Die Gondel kann zusätzlich ein Getriebe umfassen. Mittels Drehung der Gondel können die Rotorblätter in die günstigste Position zum Wind gebracht werden. Die Windrichtungsnachführung erfolgt bespielsweise durch Stellmotoren, wobei die Windrichtung über sogenannte Windgebungssensoren ermittelt wird. Die elektrische Anbindung der Gondel an das Stromnetz erfolgt in der Regel über fest mit der Gondel verbundene Kabel. Die Nabe bezeichnet den Teil des Rotors, der drehbar auf gleicher Höhe vor der Gondel angeordnet ist und in dem die Rotorblätter befestigt sind. Die Drehachse des Rotors und damit auch der Nabe und der an ihr befestigten Rotorblätter im Windbetrieb steht im Wesentlichen senkrecht zur Gondel-Drehachse. In der Nabe sind für die Drehung des Rotors zur Erzeugung von elektrischer Energie aus der Windenergie ein oder mehrere Rotorblätter gehaltert. Das Rotorblatt ist dabei so geformt, dass der auf das Rotorblatt auftreffende Wind einen Auftrieb für das Rotorblatt erzeugt, so dass der Rotor infolge des Auftriebs der Rotorblätter in Drehung versetzt wird. Moderne Rotorblätter besitzen eine flügelähnliche Form und sind in der Regel aus glasfaserverstärktem Kunststoff oder Kohlestofffasern gefertigt. Um eine Eisbildung auf den Rotorblättern zu verhindern, können Rotorblätter eine Rotorblattheizung besitzen. Eine solche Rotorblattheizung kann beispielsweise eine Leistung von einigen kW besizen. Die Stärke des Auftriebs für die Rotorblätter hängt von deren Anstellwinkel zum Wind ab. Der Anstellwinkel bezeichnet hierbei den Winkel zwischen der Windrichtung und der Oberfläche des flügelförmigen Teils der Rotorblätter. Je nach Bedarf an elektrischer Energie und Stärke des Windes können unterschiedliche Anstellwinkel gewünscht werden. Daher ist das Rotorblatt um seine Längsachse drehbar in der Nabe gelagert. Der einstellbare Anstellwinkel kann außerdem zum Anhalten (Bremsen) und Starten (Beginn der Drehung) des Rotors verwendet werden. Bei für die Energieerzeugung geeigneten Windgeschwindigkeiten wird der vormals stehende Rotor angefahren, bei zu großen Windgeschwindigkeiten wird die Windenergieanlage zum Schutz der Anlage abgeschaltet und der Rotor angehalten. Die Windgeschwindigkeit kann dabei über ein Anemometer ermittelt und mit einer entsprechenden Steuerung eine Drehung ("Pitchen") der Rotorblätter entsprechend der ermittelten Windgeschwindigkeit vorgenommen werden. Die Drehung der Rotorblätter erfolgt über einen sogenannten Pitchmotor, der innerhalb der Nabe angeordnet ist. Die Abbremsung der Anlage kann beispielsweise über einen entsprechenden, die Drehung der Rotorblätter bremsenden Anstellwinkel erreicht oder unterstützt werden. Ist die Windgeschwindigkeit zu gering für einen wirtschaftlichen Betrieb der Anlage oder soll der Rotor im Ruhebetrieb (oder Stillstandsbetrieb) der Windenergieanlage nicht rotieren, wird der Anstellwinkel auf eine Null-Grad-Position zum Wind (Segelstellung) gebracht. Die Veränderung des Anstellwinkels der Rotorblätter durch die Pitchmotoren als Reaktion auf die vorhandenen Windgeschwindigkeiten und den Erzeugungsbedarf an elektrischer Energie wird auch als Pitchregelung bezeichnet. Neben der Gondel, der Nabe, dem Rotor und dem oder den Rotorblättern als den drehbaren Komponenten kann eine Windenergieanlage noch weitere drehbare Komponenten umfassen.

Damit die Pitchmotoren mit der notwendigen elektrischen Energie versorgt werden, sind sie mit einem oder mehreren Energiespeichern als Energiequelle verbunden. Solche Energiespeicher können beispielsweise Batterien oder Super-Kondensatoren sein. Damit die elektrische Verbindung zu den Pitchmotoren vereinfacht und ein elektrischer Schleifring zur Kontaktierung nicht-rotierender Komponenten vermieden werden kann, sind sowohl die Pitchmotoren als auch die Energiespeicher auf oder in der Nabe oder auf dem Rotor montiert, so dass sowohl die Pitchmotoren als auch die Energiespeicher während des Betriebs der Windenergieanlage mit der Nabe mitrotieren. Im Gegensatz zu nichtmitrotierenden Energiespeichern kann ein Schleifring zur elektrischen Kontaktierung der Pitchmotoren vermieden werden.

Die Pitchmotoren können während des Windbetriebs (Erzeugung von elektrischer Energie aus der Windenergie) beispielsweise aus einem Teil der erzeugten elektrischen Energie gespeist werden. Diese Energiequelle ist allerdings bei Stillstand der Windenergieanlage, beispielsweise aufgrund von Windflaute oder einer Abschaltung der Windenergieanlege aufgrund zu starkem Wind oder aufgrund eines Netzausfalls nicht vorhanden. Sollte ein solcher Stillstandsbetrieb (Ruhebetrieb) längere Zeit andauern, wären die Energiespeicher zum Betrieb der Pitchmotoren aufgrund ihrer Selbstentladung ohne weitere Maßnahmen so stark entladen, dass die Rotorblätter nicht mehr durch die Pitchmotoren in eine Stellung mit geeignetem Auftrieb zum Anfahren der Windenergieanlge gedreht werden können. Um diese Situation zu vermeiden, umfasst die erfindungsgemäße Windenergieanlage ein oder mehrere Photovoltaikzellen, die zumindest den einen oder mehrere der Energiespeicher für den oder die Pitchmotoren mit elektrischer Energie versorgen. Die Anzahl und Anordnung der Photovoltaikzellen ist dabei so gewählt, dass zumindest die Selbstentladung der Energiespeicher für die Pitchmotoren kompensiert werden kann. Der Begriff "Photovoltaikzelle" bezeichnet eine Anordnung oder eine Anlage, in der die Sonnenstrahlung in elektrische Energie umgewandelt wird. Eine Photovoltaikzelle wird auch als Solarzelle bezeichnet. Photovoltaikzellen zeichnen sich durch eine lange Lebensdauer von mehr als 20 Jahren aus und sind als dünne Module auf dem Markt erhältlich, so dass sie leicht an Oberflächen angebracht oder in Oberflächen integriert werden können. Die gewünschte Menge der von den Photovoltaikzellen erzeugten elektrischen Energie (Solarstrom) kann durch eine entsprechend groß gewählte Fläche bestückt mit Photovoltaikzellen bereitgestellt werden. Photovoltaikzellen zeichnen sich dadurch aus, dass sie modular zu einem gemeinsamen Photovoltaikmodul / -anlage aus ein oder mehreren Photovoltaikzellen mit einer im Prinzip beliebig wählbaren Fläche verbunden werden können. Die Menge an Solarstrom, die die Phtovoltaikzellen in Summe liefern können, hängt neben der gemeinsamen Fläche der Photovoltaikzellen von deren Ausrichtung zur Sonne und der wetterbedingten Sonneneinstrahlung ab. Der Fachmann ist in der Lage, die Größe der gemeinsamen Fläche der Photovoltaikzellen an den Bedarf an elektrischer Energie aus Solarenergie anzupassen. Eine besonders günstige Ausrichtung der Photovoltaikzellen zur Sonne bezeichnet einen Winkel zwischen der Sonneneinstrahlungsrichtung und der Oberfläche der Photovoltaikzellen, der möglichst nahe an 90 Grad liegt. Dieser Winkel sollte für eine effektive Erzeugung von Solarenergie möglichst 30 Grad nicht unterschreiten.

Mit der Energieversorgung der Energiespeicher mittels Photovoltaikzellen ist stets ein voller Ladezustand zumindest für einen der Energiespeicher sichergestellt, so dass der oder die Pitchmotoren selbst nach langer Standzeit des Rotors und fehlender Netzverbindung mit der notwendigen Energie zur Verstellung des Anstellwinkels der Rotorblätter versorgen können. Damit kann auch ein Energiespeicher mit entsprechend kleinerer Kapazität für den Betrieb der Pitchmotoren gewählt werden, da der oder die Energiespeicher aufgrund der zur Aufladung angeschlossenen Photovoltaikzellen stets vollgeladen ist/sind. Eine weitere Stromversorgung der Pitchmotoren von außerhalb, beispielsweise durch das Stromnetz ist nicht notwendig, da die Energiespeicher durch die Photovoltaikzellen mit ausreichender Energie für ein Anfahren der Windenergieanlage versorgt werden. Dadurch werden eine kosten- und wartungsgünstige Windenergieanlage und entsprechende Komponenten der Windenergieanlage zur Verfügung gestellt, die eine kompakte Anordnung von Energiespeicher und Pitchmotoren ermöglichen.

In einer Ausführungsform sind die Photovoltaikzellen an zumindest einer Außenseite des Rotorblatts oder bei mehreren Rotorblättern an zumindest einer Außenseite eines der Rotorblätter und/oder an einer von der Gondel wegzeigenden Außenseite der Nabe angeordnet. In einer bevorzugten Ausführungsform mit mehreren Rotorblättern sind die Photovoltaikzellen an zumindest einer Außenseite jedes der Rotorblätter angeordnet. Die Anordnung kann aber auch an beiden Seiten jedes Rotorblatts erfolgen. Die Außenseite bezeichnet hier die Seite des Rotorblatts, die zumindest in einer geeigneten Stellung des Rotorblatts von der Sonne beschienen werden kann. In einer weiteren Ausführungsform umfasst das Rotorblatt eine vordere Kante und einen an die Kante anschließenden Flügelbereich zur Erzeugung des Auftriebs, wobei die eine oder mehrere Photovoltaikzellen in dem Flügelbereich angeordnet sind. Die Anordnung der Photovoltaikzelle/n an zumindest einer Außenseite des oder der Rotorblätter ist vorteilhaft, da diese eine große Fläche insbesondere im Flügelbereich besitzen und somit ausreichend Platz für die Anordnung von Photovoltaikzellen mit einer geeigneten Mindest-Gesamtfläche besitzen. Im Falle eines Rotors mit drei Rotorblättern, die jeweils mit Photovoltaikzellen ausgestattet sind, steht zumindest die Außenfläche eines der Rotorblätter in einem für die Solarstromerzeugung durch die Photovoltaikzellen besonders günstigen Winkel zur Sonne beziehungsweise zur Sonneneinstrahlung.

In einer weiteren Ausführungsform umfasst die Außenseite der Rotorblätter oder der Nabe eine oder mehrere an die Größe und Form der Photovoltaikzellen angepassten Aussparung/en, in denen die eine oder mehrere Photovoltaikzelle/n angeordnet sind. Somit sind die Photovoltaikzellen nicht auf der Oberfläche angebracht, sondern in die Oberfläche integriert. Damit wird die Form der Außenseite der Rotorblätter nicht verändert, so dass die Rotorblätter weiterhin die ursprüngliche Form und damit die ursprünglichen Eigenschaften für die Erzeugung einer Auftriebskraft durch den Wind behalten. Die Aussparungen können beispielsweise oberhalb der Photovoltaikzellen (nach außen gewandt) mit einem für die Sonnenstrahlung in dem durch die Photovoltaikzellen nutzbaren Spektrum zumindest weitgehend transparenten Material verkleidet sein, so dass die äußere Form des Rotorblatts zur Beibehaltung seiner Ströumgseigenschaften der Form entspricht, die das Rotorblatt auch ohne die Photovoltaikzellen hätte. In einer bevorzugten Ausführungsform stellt/stellen die Oberfläche/n der ein oder mehreren Photovoltaikzellen im Bereich der Aussparung die Oberfläche des Rotorblatts oder der Nabe dar. Dadurch kann die voranstehend angeführte transparente Abdeckung vermieden werden.

In einer weiteren Ausführungsform besitzt der Flügelbereich eine erste Oberfläche und eine der ersten Oberfläche gegenüberliegende zweite Oberfläche, wobei die eine oder mehreren Photovoltaikzelle/n in der ersten und zweiten Oberfläche angeordnet sind. Somit ist unabhängig von der Stellung des Rotorblatts immer eine der Oberflächen der Sonne zugewandt, so dass es einer besonders geeignete Ausrichtung des Rotorblatts zur Sonne höchstens bei geringer Sonneneinstrahlung bedarf. Sind bei einem Rotor mit drei Rotorblättern alle Rotorblätter auf beiden (ersten und zweiten) Oberflächen mit Photovoltaikzellen ausgerüstet, kann auf eine besondere Ausrichtung der Rotorblätter zur Sonne verzichtet werden, da in einer beliebigen Stellung des Rotors immer eine Oberfläche eine günstige Stellung zur Sonneneinstrahlung besitzt. Zudem wirken sich Abschattungseffekte durch ein anderes schattenwerfendes Rotorblatt nicht negativ auf die Stromerzeugung durch die Photovoltaikzellen aus, da immer eine Oberfläche der Sonne besonders günstig zugewandt ist und damit nicht durch die anderen Rotorblätter abgeschattet werden kann.

In einer weiteren Ausführungsform sind die an der von der Gondel wegzeigenden Außenseite der Nabe angeordneten Photovoltaikzellen symmetrisch um den Drehpunkt der Nabe angeordnet. Dadurch wird sichergestellt, dass auch ohne Einstellung einer besonders günstigen Position der Nabe, deren Form in der Regel im Wesentlichen konisch ist, immer zumindest ein Teil der auf der Nabe angeordneten Photovoltaikzellen besonders günstig zur Sonne ausgerichtet sind.

In einer weiteren Ausführungsform sind die Photovoltaikzellen an mindestens einer Außenseite, vorzugsweise an mindestens zwei in unterschiedliche Richtungen weisenden Außenseiten, der Gondel angeordnet und mit den Energiespeichern für die Pitchmotoren oder mit den Pitchmotoren zumindest im Ruhebetrieb (nicht rotierender Rotor) elektrisch verbunden. Diese elektrische Verbindung kann im Windbetrieb unterbrochen sein, da die Energiespeicher dann über die aus der Windkraft gewonnene elektrische Energie versorgt werden können. Eine dauerhafte elektrische Verbindung zwischen Photovoltaikzellen und Energiespeicher kann beispielsweise über einen Schleifring erreicht werden.

In einer bevorzugten Ausführungsform besitzt die Gondel zumindest in der Nähe der Nabe eine gekrümmte Außenseite und die Photovoltaikzellen sind in dem vom Erdboden wegzeigenden Bereich der gekrümmten Außenseite angeordnet. Somit sind zumindest ein Teil der Photovoltaikzellen in einem für die Solarstromerzeugung günstigen Winkel zur Sonne angeordnet.

In einer weiteren Ausführungsform umfasst die Windenergieanlage eine Steuerung für die drehbaren Komponenten, die so ausgelegt ist, dass die mit einer oder mehreren Photovoltaikzellen ausgestatten drehbaren Komponenten im Ruhebetrieb der Windenergieanlage in eine Position gebracht werden, die für eine Erzeugung von elektrischer Energie durch die Photovoltaikzellen besonders günstig ist. Durch eine gezielte günstige Ausrichtung der Photovoltaikzellen zur Sonne kann einerseits die notwendige Fläche an Photovoltaikzellen zur Erzeugung der benötigten elektrischen Energie zur Aufladung der Energispeicher verringert werden, da bei dieser günstigen Ausrichtung pro Photovoltaikzelle mehr Solarenergie erzeugt wird als bei einer ungünstigen Ausrichtung. Andererseits brauchen nicht mehrere Rotorblätter und/oder die Gondel auf mehreren Seiten mit Photovoltaikzellen ausgestattet zu werden. In einer bevorzugten Ausführungsform sind dabei die an der von der Gondel wegzeigenden Außenseite der Nabe angeordneten Photovoltaikzellen asymmetrisch um den Drehpunkt der Nabe angeordnet. So kann die Anordnung der Photovoltaikzellen an oder auf der Nabe kompakter gestaltet werden, was die Fertigung der Nabe und die Montage der Photovoltaikzellen einfacher gestaltet.

In einer Ausführungsform ist die Steuerung der Windenergieanlage so ausgelegt, dass die Rotorblätter bei einer mit Photovoltaikzellen ausgestatteten Gondel im Ruhebetrieb in einer Position gestoppt werden, in der die Abschattung der Photovoltaikzellen an der Gondel durch die Rotorblätter minimal ist. Damit kann verhindert werden, dass die Erzeugung elektrischer Energie aus Sonnenenergie durch die Photovoltaikzellen an der Gondel bei optimaler Ausrichtung der Gondel zur Sonne nicht durch ungünstig stehende Rotorblätter gestört werden kann.

Erfindungegemäße Windenergieanlagen können dabei mit Photovoltaikzellen an den Rotorblättern und/oder an der Nabe und/oder an der Gondel ausgestattet sein.

Die Erfindung betrifft des Weiteren eine Komponente für die Verwendung als drehbare Komponente in einer Windenergieanlage mit Pitchregelung gemäß der vorliegenden Erfindung, die mit ein oder mehreren Photovoltaikzellen ausgestattet ist, die dazu vorgesehen sind, die Energiespeicher für die Pitchmotoren der Windenergieanlage mit elektrischer Energie aufzuladen. Da die einzelnen Komponenten von Windenergieanlagen separat vetrieben werden können, besteht ein Schutzbedürfnis auch für die einzelnen Komponenten.

Die Erfindung betrifft des Weiteren ein Verfahren zum Betreiben einer Windenergieanlage mit Pitchregelung gemäß der vorliegenden Erfindung, umfassend die Schritte
- Aufladen der Energiespeicher für die Pitchmotoren während des Windbetriebs der Windenergieanlage mittels der durch die Windenergieanlage erzeugten Energie und/oder durch ein angeschlossenes Stromnetz und/oder mittels der durch die Photovoltaikzellen erzeugten Energie;
- Einstellen eines für den Ruhebetrieb geeigneten Anstellwinkels für jedes Rotorblatt mittels der Pitchmotoren;
- Aufladen von zumindest einem der Energiespeicher für die Pitchmotoren im Ruhebetrieb mittels der durch die Photovoltaikzellen erzeugten Energie; und
- Einstellen eines für den Windbetrieb geeigneten Anstellwinkels für zumindest eines der Rotorblätter durch die Pitchmotoren, die mit der nötigen Energie aus den mittels der Photovoltaikzellen aufgeladenen Energiespeichern gespeist werden.

Mit diesem Verfahren können Windenergieanlagen mit Energiespeichern mit entsprechend kleinerer Kapazität für den Betrieb der Pitchmotoren ausgestattet werden, da der oder die Energiespeicher aufgrund der zur Aufladung angeschlossenen Photovoltaikzellen stets vollgeladen ist/sind. Eine weitere Stromversorgung der Pitchmotoren von außerhalb, beispielsweise durch das Stromnetz ist nicht notwendig, da die Energiespeicher durch die Photovoltaikzellen mit ausreichender Energie für ein Anfahren der Windenergieanlage versorgt werden. Entsprechend braucht kein Schleifkontakt zwischen Rotor und Gondel zur Stromversorgung der Pitchmotoren beziehungsweise der Energiespeicher eingebaut zu werden. Dadurch wird ein kosten- und wartungsgünstiger Betrieb der erfindungsgemäßen Windenergieanlage mit einer kompakten Anordnung von Energiespeicher und Pitchmotoren ermöglicht.

In einer Ausführungsform umfasst das Verfahren den zusätzlichen Schritt, dass eine Steuerung der Windkraftenergieanlage für die drehbaren Komponenten die mit ein oder mehreren Photovoltaikzellen ausgestatteten drehbaren Komponenten im Ruhebetrieb der Windkraftenergieanlage in eine Position bringt, die für eine Erzeugung von elektrischer Energie durch die Photovoltaikzellen besonders günstig ist. Durch diesen Verfahrensschritt kann die notwendige Fläche an Photovoltaikzellen zur Erzeugung der benötigten elektrischen Energie zur Aufladung der Energispeicher verringert werden, da bei dieser günstigen Ausrichtung zur Sonne pro Photovoltaikzelle mehr Solarenergie erzeugt wird als bei einer ungünstigen Ausrichtung.

In einer weiteren Ausführungsform erfolgt der Schritt des Aufladens der Energiespeicher für die Pitchmotoren im Ruhebetrieb bei mehreren Energiespeichern sukzessive für jeden Energiespeicher. Die sukzessive Aufladung stellt sicher, dass nach kurzer Zeit zumindest ein Energiespeicher voll geladen für den Betrieb eines Pitchmotors zur Verfügung steht. Damit kann zumindest ein Rotorblatt so gedreht werden, dass es einen Auftrieb zur Drehung des Rotors besitzt. Damit kann der Rotor zumindest in leichte Rotation vesetzt werden, so dass die Windenergieanlage zumindest ausreichend Strom für die Aufladung der anderen Energiespeicher zum Betrieb der anderen Pitchmotoren erzeugt. Damit können unverzüglich auch die anderen Rotorblätter durch die Pitchmotoren gedreht und damit die Windenergieanlage zur Erzeugung elektrischer Energie zur Einspeisung in ein Stromnetz angefahren werden.

### Kurze Beschreibung der Abbildungen

Diese und andere Aspekte der Erfindung werden im Detail in den Abbildungen wie folgt gezeigt.
- Fig.1:: eine Ausführungsform einer erfindungsgemäßen Windenergieanlage mit Photovoltaikzellen an den Rotorblättern.
- Fig.2:: eine alternative Ausführungsform einer erfindungsgemäßen Windenergieanlage mit Photovoltaikzellen an der Gondel.
- Fig.3:: eine alternative Ausführungsform einer erfindungsgemäßen Windenergieanlage mit Photovoltaikzellen an der Nabe.
- Fig.4:: Photovoltaikzellen angeordnet in geeigneten Aussparungen im Flügelbereich eines Rotor mit (a) einer transparenten Abdeckung der Photovoltaikzellen als Oberfläche des Flügelbereichs, und (b) mit Photovoltaikzellen, deren eigene Oberfläche die Oberfläche des Flügelbereichs bilden.
- Fig.5:: eine Ausführungsform eines erfindungsgemäßen Verfahrens zum Aufladen der Energiespeicher der Pitchmotoren einer erfindungsgemäßen Windenergieanlage.

### Detaillierte Beschreibung der Ausführungsbeispiele

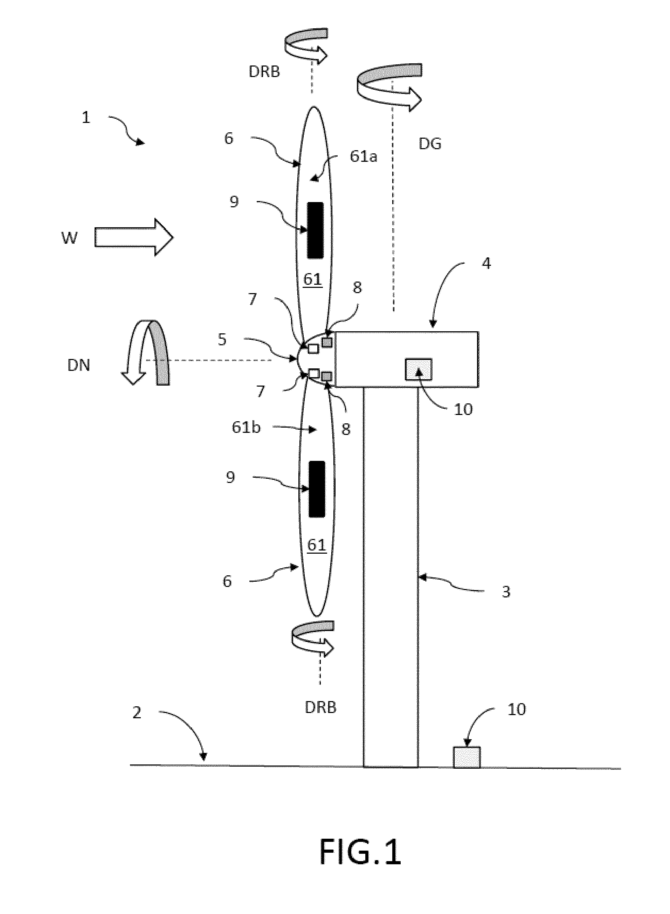

Fig. 1 zeigt eine Ausführungsform einer erfindungsgemäßen Windenergieanlage 1 mit Pitchregelung bestehend aus mehreren Komponenten umfassend einen Turm 3, der die übrigen Komponenten der Windenergieanlage trägt und im Erdboden 2 verankert ist. Auf dem Turm 3 sind eine um eine Drehachse DG drehbar auf dem Turm 3 gelagerte Gondel 4, ein an der Gondel 4 um eine Drehachse DN drehbar befestigter Rotor mit Nabe 5 und mindestens zwei in der Nabe 5 gehalterten Rotorblätter 6 angeordnet. In dieser seitlichen Darstellung kann die Windenergieanlage 1 zwei Rotorblätter 6 oder drei Rotorblätter 6 umfassen, wobei im letzteren Fall das dritte Rotorblatt 6 von der Nabe 5 verdeckt wird. Die Rotorblätter 6 besitzen im Wind W einen vom Anstellwinkel zum Wind W abhängigen Auftrieb zum Drehen des Rotors um die Drehachse DN, wobei jedes Rotorblatt 6 um seine Längsachse (Drehachse DRB) drehbar in der Nabe 5 gelagert ist, damit der Anstellwinkels jedes Rotorblatts 6 relativ zum Wind W jeweils mittels eines Pitchmotors 7 eingestellt werden kann. Jedes der Rotorblätter 6 besitzt hier einen Pitchmotor 7, wobei die Pitchmotoren 7 in der Nabe 5 angeordnet sind und aus einem oder mehreren ebenfalls in der Nabe 5 angeordneten Energiespeichern 8 mit elektrischer Energie vorsorgt werden. Die Pitchmotoren 7 und Energiespeicher 8 drehen sich im Windbetrieb mit der Nabe 5 mit. Geeignete Energiespeicher sind beispielsweise Batterien oder Ultra-Kondensatoren. Zusätzlich ist mindestens eine der drehbaren Komponenten 4, 5, 6 mit einer oder mehreren Photovoltaikzellen 9 ausgestattet, die so mit mindestens einem der Energiespeicher 8 verbunden sind, dass die eine oder mehreren Photovoltaikzelle/n 9 zumindest den Energiespeicher 8 für den Pitchmotor 7 mit elektrischer Energie zumindest im Ruhebetrieb versorgen können. Hier können in einer Ausführungsform alle Energiespeicher 8 parallel durch die Photovoltaikzellen aufgeladen werden. In einer anderen Ausführungsform kann nur ein Energiespeicher 8 zum Betrieb eines Pitchmotors 7 durch die Photovoltaikzellen 9 aufgeladen werden. In einer weiteren Ausführungsform kann das Aufladen AR der Energiespeicher 8 für die Pitchmotoren 7 im Ruhebetrieb bei mehreren Energiespeichern 8 sukzessive für jeden Energiespeicher 8 erfolgen, bis am Ende alle Energiespeicher aufgeladen sind. Die Photovoltaikzellen 9 sind dabei mittels elektrischer Kabel innerhalb der Rotorblätter 6 mit den Energiespeichern 8 direkt oder indirekt über die Pitchmotoren 7 verbunden. Vorteilhaft ist hier die einfach zu gestaltende elektrische Verbindung der Photovoltaikzellen 9 mit den Energiespeichern 8, da sich alle Komponenten relativ zueinander nicht bewegen. Die Drehung der Rotorblätter 6 entlang der Drehachse DRB ist dabei kein Hindernis, da die Kabelverbindungen so flexibel gestaltet sein können, dass Drehungen der Rotorblätter um +/- 180 Grad oder mehr ohne Modifikation der Kabelverbindungen leicht tolerierbar sind. Die Photovoltaikzellen 9 sind in dieser Ausführungsform an zumindest einer Außenseite 61 jedes der Rotorblätter 6 angeordnet, wobei die Rotorblätter 6 eine vordere Kante und einen an die Kante anschließenden Flügelbereich 61 zur Erzeugung des Auftriebs umfassen, der sich aufgrund seiner Größe besonders gut für die Anbringung von einer oder mehreren Photovoltaikzellen 9 in diesem Flügelbereich 61 eignet. Der Flügelbereich 61 besitzt dabei eine erste Oberfläche 61 a und eine der ersten Oberfläche 61 a gegenüberliegende zweite Oberfläche 61 b, wobei die ein oder mehreren Photovoltaikzellen 9 in der ersten Oberfläche 61 a (oberes Rotorblatt) und in der zweiten Oberfläche 61 b (unteres Rotorblatt) angeordnet sind. Die Windenergieanlage 1 umfasst des Weiteren eine Steuerung 10 für die Rotorblätter 6, die so ausgelegt ist, dass die mit einer oder mehreren Photovoltaikzellen 9 ausgestatten Rotorblätter 6 im Ruhebetrieb der Windenergieanlage 1 in eine Position gebracht PB werden, die für eine Erzeugung von elektrischer Energie durch die Photovoltaikzellen 9 besonders günstig ist, also zumindest für eines der Rotorblätter 6 in einen Winkel mit möglichst hoher Sonneneinstrahlung. Da die geographische Position der Windenergieanlage und der dortige Sonnenstand als Funktion der Uhrzeit bekannt sind, kann die Steuerung nach einer entsprechend in der Steuerung abgelegten Steuerkurve als Funktion der Uhrzeit erfolgen.

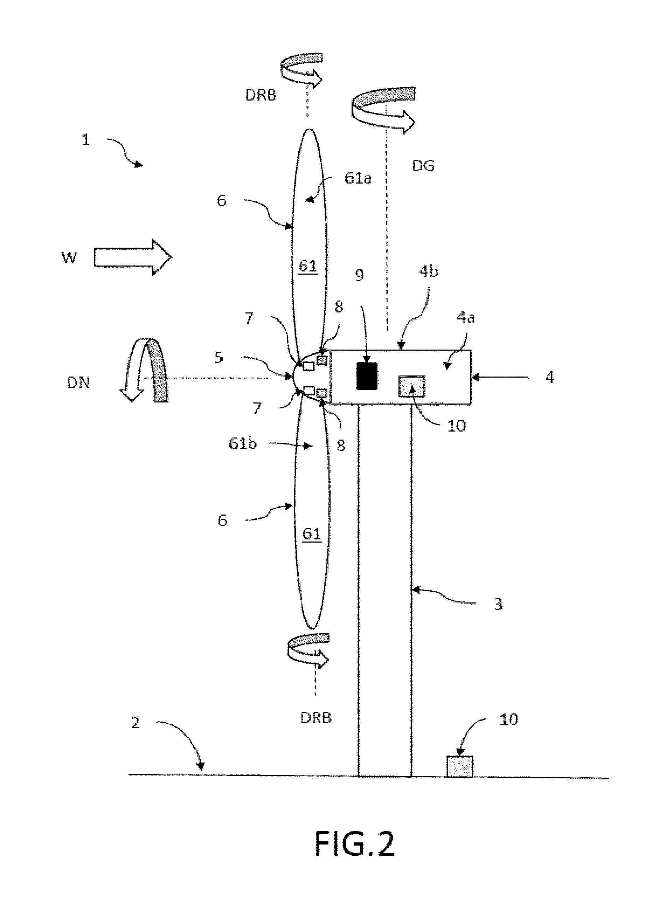

Fig.2 zeigt eine alternative Ausführungsform einer erfindungsgemäßen Windenergieanlage 1, bei der die Photovoltaikzellen 9 anstatt an den Rotorblättern 6 hier an der Gondel 4 angeordnet sind. Eine Anordnung der Photovoltaikzellen 9 auf der Gondel 4 erleichtert deren Wartung, da die Gondel 4 leichter zugänglich ist als beispielsweise die Flügelflächen 61 der Rotorblätter 6. Da die Gondel aber nicht mit den Energiespeichern 8 mitrotiert, wird ein zusätzlicher Schleifring für die elektrische Verbindung zwischen Photovoltaikzellen 9 und Energiespeichern 8 notwendig, sofern eine dauerhafte elektrische Verbindung zu den Photovoltaikzellen gewünscht ist. Für die übrigen Komponenten wird auf die Beschreibung zu Figur 1 verwiesen. Die Photovoltaikzellen 9 sind hier beispielsweise an beiden seitlichen Außenseiten 4a der Gondel 4 angeordnet (Hinterseite der Gondel 4 ist nicht sichtbar), damit die Photovoltaikzellen an zwei in unterschiedliche Richtungen weisenden Außenseiten 4a der Gondel 4 angeordnet sind, von denen eine Außenseite der Sonne zugewandt ist. Alternativ können die Photovoltaikzellen 9 auch auf der oberen Außenseite 4b der Gondel angeordnet sein, die unabhängig von der Sonnenposition immer Sonneneinstrahlung bekommt, allerdings nur in der Mittagszeit aus einem besonders günstigen Winkel (möglichst senkrechter Einfall der Sonnenstrahlung auf die Oberfläche der Photovoltaikzellen). Falls die Gondel 4 in der Nähe der Nabe 5 eine gekrümmte Außenseite besitzt, ist es zweckmäßig, die Photovoltaikzellen 9 in dem vom Erdboden wegzeigenden Bereich der gekrümmten Außenseite anzugeordnen. Die Windenergieanlage 1 umfasst in einer Ausführungsform eine Steuerung 10 für die drehbare Gondel 4, die so ausgelegt ist, dass die mit einer oder mehreren Photovoltaikzellen 9 ausgestatte drehbare Gondel 4 im Ruhebetrieb der Windenergieanlage 1 in eine Position gebracht PB wird, die für eine Erzeugung von elektrischer Energie durch die Photovoltaikzellen 9 besonders günstig ist. In einer bevorzugten Ausführungsform ist die Steuerung 10 zusätzlich so ausgelegt, dass die Rotorblätter 6 im Ruhebetrieb in einer Position gestoppt werden, in der die Abschattung der Photovoltaikzellen 9 an der Gondel 4 durch die Rotorblätter 6 minimal ist. Da die geographische Position der Windenergieanlage 1 bekannt ist und der dortige Sonnenstand eine Funktion der Uhrzeit ist, kann die Steuerung nach einer entsprechend in der Steuerung abgelegten Steuerkurve als Funktion der Uhrzeit, auch für die Stellung der Rotorblätter, erfolgen.

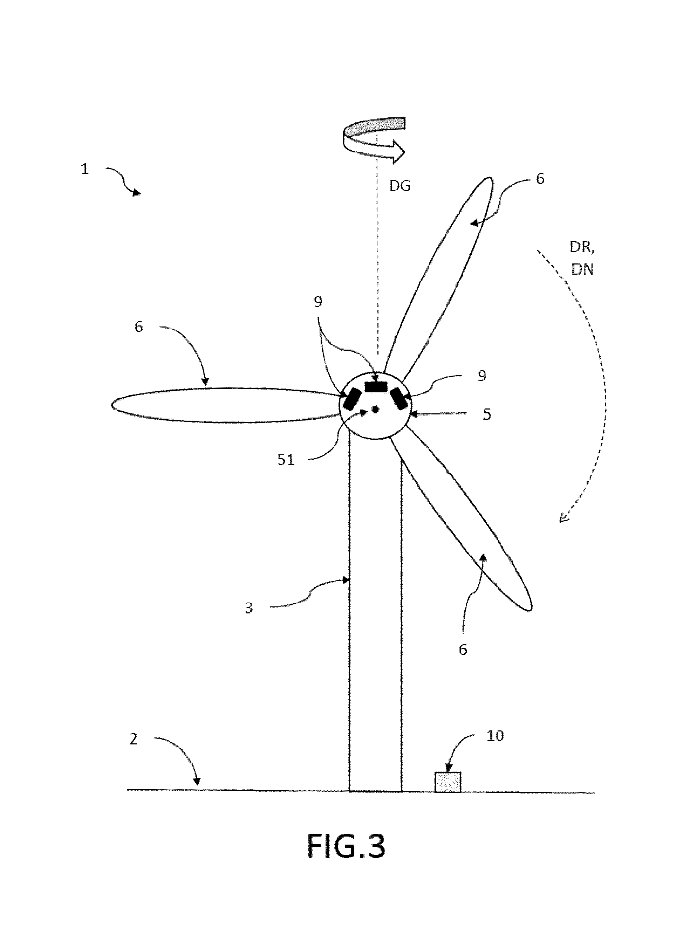

Fig.3 zeigt eine weitere alternative Ausführungsform einer erfindungsgemäßen Windenergieanlage 1 mit Photovoltaikzellen 9 an der Nabe 5. Für die übrigen Komponenten wird auf die Beschreibung zu den Figuren 1 und 2 verwiesen. Die an der von der Gondel 4 wegzeigenden Außenseite der Nabe 5 angeordneten Photovoltaikzellen 5 sind asymmetrisch um den Drehpunkt 51 der Nabe 5 angeordnet. Da die Nabe, wie aus den seitlichen Ansichten der Figuren 1 und 2 ersichtlich ist, in der Regel eine gekrümmte Form besitzt, zeigt die Oberfläche der Photovoltaikzellen 9 in Richtung der Sonneneinstrahlung (nach oben), sofern die Nabe 5 in der in Figur 3 gezeigten Position zum Halten kommt. Hier sind die Photovoltaikzellen 9 nur in der oberen, der Sonneneinstrahlung zugewandten Hälfte der Nabe 5 angeordnet und daher in einer besonders günstigen Position zur Erzeugung von Solarstrom. Diese Position kann durch eine Steuerung 10 für die Nabe 5 eingestellt werden, die so ausgelegt ist, dass die mit einer oder mehreren Photovoltaikzelle/n 9 ausgestattete Nabe 5 im Ruhebetrieb der Windenergieanlage 1 in diese günstige Position für die Solarstromerzeugung gebracht PB wird. Alternativ können die an der von der Gondel 4 wegzeigenden Außenseite der Nabe 5 angeordneten Photovoltaikzellen 9 symmetrisch um den Drehpunkt der Nabe 5 angeordnet sein, wodurch eine Steuerung zur richtigen Positionierung der Nabe unnötig wird. Vorzugsweise ist in beiden Fällen eine Steuerung 10 für die Ausrichtung der Nabe 5 zur Sonne mittels Drehung der Gondel 4 um die Drehachse DG vorgesehen.

Für die Ausführungsformen gemäß der Figuren 1 - 3 kann die Steuerung 10 in zumindest einer der drehbaren Komponenten 4, 5, 6 oder im Turm 3 oder auf dem Erdboden 2 angeordnet sein. Die Steuerung ist in geeigneter Weise mit den Motoren zur Drehung der drehbaren Komponenten 4, 5, 6 verbunden.

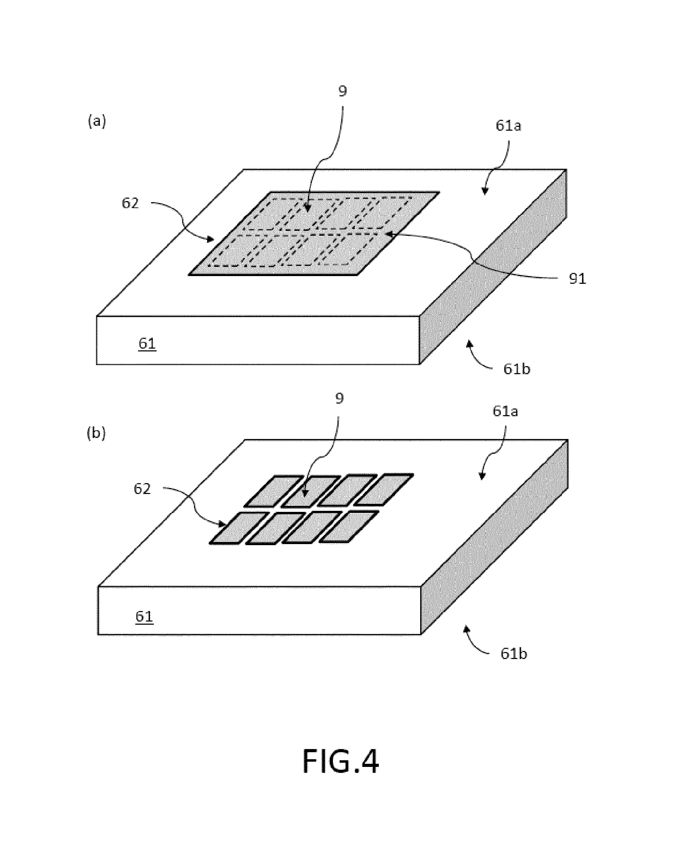

Fig.4 zeigt einen Ausschitt eines Rotorblattes 6, der mehrere Photovoltaikzellen 9 umfasst, die in Aussparungen 62 in dem Flügelbereich 61 angeordnet sind, wobei die Aussparungen 62 auf die Form der Photovoltaikzellen 9 geeignet angepasst sind. In Fig.4(a) sind die Photovoltaikzellen mit einer transparenten Abdeckung 91 (grau dargestellt) oberhalb der Photovoltaikzellen 9 (gestrichelt dargestellt, da unterhalb der Abdeckung angeordnet) als Teil der Oberfläche 61 a, 61 b des Flügelbereichs 61 abgedeckt. Die Abdeckung 62 muss dabei zumindest in dem Spektralbereich des Sonnenspektrums zumindest weitgehend transparent sein, dessen Strahlung für die Solarstromerzeugung mittels Umwandlung der Sonnenenergie in elektrische Energie verwendet wird. Geeignete Abdeckungen sind dem Fachmann bekannt. In Fig.4(b) stellen die eigenen Oberflächen der Photovoltaikzellen 9 die Oberfläche 61 a, 61 b des Flügelbereichs 61 dar, so dass eine Abdeckung, wie in Fig.4(a) gezeigt, vermieden werden kann. Um die Kontur des Flügelbereichs 61 besonders gut nachbilden zu können, sind in diesem Ausführungsbespiel insbesondere kleinflächige Photovoltaikzellen 9 zweckmäßig, die zu einer entsprechenden Gesamtfläche mit der für die Erzeugung des Solarstroms benötigten Größe zusammengestellt werden. Die in Fig.4 gezeigten Beispiele gelten entsprechend auch für eine Anordnung der Photovoltaikzellen auf der Nabe 5 oder der Gondel 4. In diesem Fall wären die gezeigten Oberflächen 61 a die äußere Oberfläche der Nabe 5 oder der Gondel 4. Alternativ zu einer Anordnung der Photovoltaikzellen in vorher angefertigten Aussparungen 62 in den Komponenten 4, 5 , 6 können Photovoltaikzellen auch auf den Oberflächen der drehbaren Komponenten 4, 5, 6 angebracht werden, beispielsweise können die Photovoltaikzellen 9 auf die jeweiligen Oberflächen aufgeklebt werden. Hier müsste lediglich ein Loch für die Durchführung der elektrischen Kabel von den Photovoltaikzellen 9 in den Innenraum der drehbaren Komponenten 4, 5, 6 vorgesehen sein. Dies hat den Vorteil, dass ohne zusätzlichen Anpassungsaufwand die Gesamtfläche der Photovoltaikzellen beliebig im Rahmen der verfügbaren Oberflächen entsprechend des Strombedarfs für die Pitchmotoren 7 und gegebenenfalls für die Stromversorgung weiterer Komponenten und der Stromerzeugungseffektivität (Lage der Windenergieanlage, Grad der Sonneneinstrahlung) variiert werden kann. Für aufgeklebte Photovoltaikzellen eignen sich insbesondere flexible Photovoltaikzellen, da sich diese auch an gekrümmte Oberflächen anschmiegen, beispielsweise Photovoltaikzellen aus organischem Material. Der Vorteil von Photovoltaikzellen angeordnet in entsprechenden Aussparungen liegt darin, dass die Strömungseigenschaften beispielsweise der Rotorblätter 6 und der Nabe 5 durch die vorhandenen Photovoltaikzellen 9 nicht beeinflusst werden. Eine transparente Abdeckung 62 schützt die Photovoltaikzellen zusätzlich gegen äußere mechanische Einflüsse, beispielsweise Hagelschlag oder Vogelschlag. Dagegen wird durch Photovoltaikzellen, deren Oberfläche gleichzeitig die Oberfläche der Rotoren 6 oder Nabe 5 darstellen (z.B. flexible Photovoltaikzellen), die Montage der Photovoltaikzellen vereinfacht.

Die Größe der Gesamtfläche, die von Photovoltaikzellen 9 bedeckt sein muss, damit die notwendige Energie zur Aufladung der Energiespeicher 8 bereitgestellt werden kann, ergibt sich aus den technischen Daten der jeweiligen Windenergieanlage 1 und aus den Daten für die Sonneneinstrahlung am geographischen Ort der Windenergieanlage 1. In Deutschland hat man beispielsweise eine durchschnittliche Sonneneinstrahlung von 650 - 1150 kWh pro kW-peak und Jahr. Eine typische Photovoltaikanlage erzeugt 1 kW-peak bei einer Gesamtfläche von 10 m². Daraus ergibt sich für Deutschland ein Energieertrag von 65 - 115 kWh pro Quadratmeter Photovoltaikzellenfläche und Jahr. Starkwindrotoren haben beispielsweise Flügelflächen von bis zu oder mehr als 1000 m². Pitchmotoren 7 einer 6 MW-Windenergieanlagen haben beispielsweise eine Leistung von 7,5 kW pro Pitchmotor 7, wobei der Pitchmotor 7 beispielsweise aus einer Reihenschaltung von achtzehn 12 V-Batterie als Energiespeicher 8 mit jeweils einer Kapazität von 7,2 Ah oder 12,0 Ah gespeist wird. Die Selbstentladung solcher Batterien beträgt ca. 9% nach 3 Monaten. Eine Photovoltaikanlage müsste daher zur Kompensation der Selbstentladung von achtzehn Batterien 78 Wh pro Monat erzeugen, wozu eine Gesamtfläche von 16 cm² pro zu versorgender Batterie (inklusive einer 100% Sicherheitsreserve) ausreichend wäre. Bei einer Gesamtzahl von achtzehn zu ladenden Batterien beträgt die Gesamtfläche inklusive einer entsprechenden Sicherheitsreserve dann 300 cm². Je nach Zykluszeit zwischen Windbetrieb und Ruhebetrieb und der Betriebsdauer der Pitchmotoren 7 im Ruhebetrieb der Windenergieanlage 1 aus den Energiespeichern 8 heraus müsste die Fläche ausgestattet mit Photovoltaikzellen entsprechend größer dimensioniert werden. Werden anstatt Batterien sogenannte Ultra-Kondensatoren verwendet, die eine schnellere Selbstentladung als Batterien zeigen, wäre eine Mindestfläche von 25 cm² pro zu versorgendem Ultra-Kondensatoren-Energiespeicher 8 ausreichend, wobei die Gesamtfläche dann mit der Anzahl der verwendeten Ultra-Kondensatoren skaliert. Sollen weitere Komponenten der Windenergieanlage 1 zusätzlich mit elektrischer Energie durch die Photovoltaikzellen 9 versorgt werden, müsste die benötigte Gesamtfläche vom Fachmann entsprechend größer dimensioniert werden. Bei der Dimensionierung der Gesamtfläche der Photovoltaikzellen 9 ist ferner zu beachten, dass die Photovoltaikzellen 9 je nach Anordnung an der jeweiligen drehbaren Komponente und deren Stand zur Sonneneinstrahlung nicht den für Deutschland typischen durchschnittlichen Energieertrag liefern, sondern weniger. Wenn man zusätzlich einen Sicherheitsaufschlag zur Kompensation unterdurchschnittlicher Energieerträge hinzurechnet, so wären dennoch Gesamtflächen für Photovoltaikzellen 9 auch unterhalb von 1 m² für die Aufladung der Energiespeicher für die Pitchmotoren verwendbar. Zusätzlich können ungünstige klimatische Bedingungen beim Betrieb der Windenergieanlage 1 eine schnellere Selbstentladung der Energiespeicher verursachen, was ebenfalls zu einer größer zu dimensionierenden Fläche der Photovoltaikzellen führt. Ebenso sind die Abweichungen der durchschnittlichen Sonneneinstrahlung von den für Deutschland typischen Werten bei einem Betrieb der Windenergieanlgae an einem anderen geographischen Ort zu berücksichtigen.

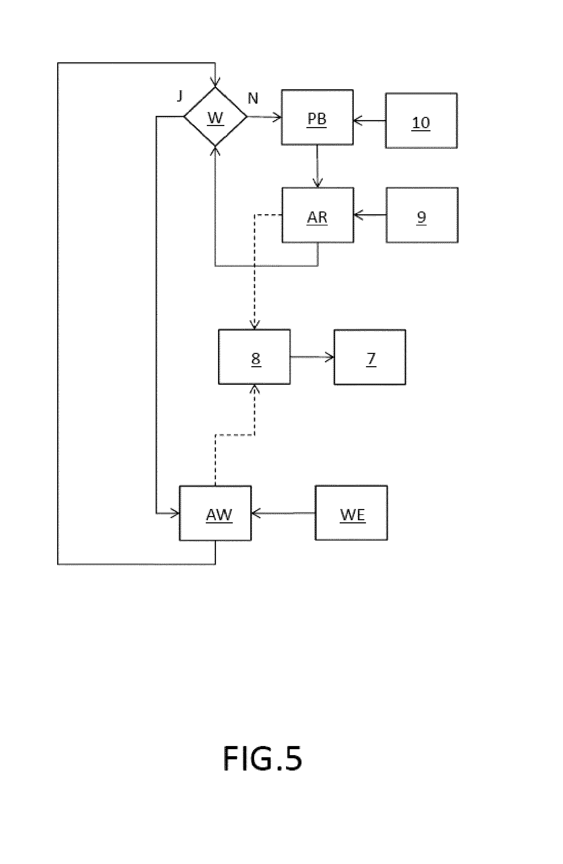

Fig.5 zeigt eine Ausführungsform eines erfindungsgemäßen Verfahrens zum Aufladen der Energiespeicher 8 der Pitchmotoren 7 einer erfindungsgemäßen Windenergieanlage 1. Das Verfahren umfasst die Schritte des Aufladens AW aller Energiespeicher 8 (gestrichelter Pfeil) für die Pitchmotoren 7 während des Windbetriebs (geeigneter Wind vorhanden: "J") der Windenergieanlage 1 mittels der durch die Windenergieanlage 1 erzeugten Energie WE. Alternativ können die Energiespeicher auch durch ein angeschlossenes Stromnetz und/oder mittels des durch die Photovoltaikzellen 9 erzeugten Solarstroms während des Windbetriebs aufgeladen werden. Nachdem der Rotor mittels Einstellen eines für den Ruhebetrieb geeigneten Anstellwinkels für jedes Rotorblatts 6 über die Pitchmotoren oder durch zusätzliches Bremsen auf andere Art zum Stehen gekommen ist, wird das Aufladen AR von zumindest einem der Energiespeicher 8 (gestrichelter Pfeil) für die Pitchmotoren 7 im Ruhebetrieb mittels der durch die Photovoltaikzellen 9 erzeugten Energie durchgeführt. Der oder die auf diese Weise aufgeladenen Energiespeicher sind bei einem gewünschten Ende des Ruhebetriebs in der Lage, die Pitchmotoren mit der notwendigen Energie zur Drehung der Rotorblätter 6 zu versorgen, so dass ein für den Windbetrieb geeigneter Anstellwinkel für zumindest eines der Rotorblätter 6 durch die Pitchmotoren 7 eingestellt werden kann. Sobald sich der Rotor dreht, können die Energiespeicher 8 wieder aus Windenergie WE aufgeladen AW werden. Bevorzugt umfasst das Verfahren den zusätzlichen Schritt, dass die Steuerung 10 der Windkraftenergieanlage 1 für die drehbaren Komponenten 4, 5, 6 die mit ein oder mehreren Photovoltaikzellen 9 ausgestatteten drehbaren Komponenten 4, 5, 6 im Ruhebetrieb der Windkraftenergieanlage 1 in eine Position bringt PB, die für eine Erzeugung von elektrischer Energie durch die Photovoltaikzellen 9 besonders günstig ist.

Die hier gezeigten Ausführungsformen stellen nur Beispiele für die vorliegende Erfindung dar und dürfen daher nicht einschränkend verstanden werden. Alternative durch den Fachmann in Erwägung gezogene Ausführungsformen sind gleichermaßen vom Schutzbereich der vorliegenden Erfindung umfasst.

### Liste der Bezugszeichen

- 1: Windenergieanlage
- 2: Erdboden / Erdoberfläche
- 3: Turm der Windenergieanlage
- 4: Gondel der Windenergieanlage
- 4a: seitliche Außenseite der Gondel
- 4b: obere Außenseite der Gondel
- 5: Nabe der Windenergieanlage
- 6: Rotorblatt der Windenergieanlage
- 61: Flügelbereich des Rotorblatts
- 61 a: erste Oberfläche des Flügelbereichs
- 61 b: zweite Oberfläche des Flügelbereichs
- 62: Aussparung zur Montage von Photovoltaikzellen
- 7: Pitchmotor für das Rotorblatt
- 8: Energiespeicher zur Energieversorgung des Pitchmotors
- 9: Photovoltaikzelle(n) / Modul aus mehreren Photovoltaikzellen
- 91: transparente Abdeckung der Photovoltaikzellen
- 10: Steuerung für die drehbaren Komponenten zur günstige Ausrichtung der Photovoltaikzelle(n)

- AR: Aufladen der Energiespeicher im Ruhebetrieb
- AW: Aufladen der Energiespeicher im Windbetrieb
- DG: Drehachse der Gondel
- DN: Drehachse der Nabe
- DR: Drehachse des Rotors / Rotorblätter durch den Wind
- DRB: Drehachse des Rotorblatts zur Einstellung des Anstellwinkels mittels Pitchmotor
- PB: Positionieren der Nabe / Rotorblätter in einer günstigen Position zur Erzeugung von Solarstrom durch die Photovoltaikzellen
- W: geeigneter Wind zum Windbetrieb
- WE: Windenergie

## Patentansprüche

1. Eine Windenergieanlage (1) mit Pitchregelung aus mehreren Komponenten umfassend einen Turm (3), eine drehbar auf dem Turm (3) angeordnete Gondel (4), einen an der Gondel (4) drehbar befestigten Rotor mit Nabe (5) und mindestens ein in der Nabe (5) gehaltertes Rotorblatt (6), das im Wind (W) einen vom Anstellwinkel zum Wind (W) abhängigen Auftrieb zum Drehen des Rotors besitzen, wobei jedes Rotorblatt (6) um seine Längsachse (DRB) drehbar in der Nabe (5) gelagert ist und der Anstellwinkels jedes Rotorblatts (6) relativ zum Wind (W) jeweils mittels eines in der Nabe oder im Rotorblatt angeordneten Pitchmotors (7) eingestellt werden kann, wobei der Pitchmotor (7) aus einem oder mehreren Energiespeichern (8) mit elektrischer Energie vorsorgt werden kann und mindestens eine der drehbaren Komponenten (4, 5, 6) mit einer oder mehreren Photovoltaikzellen (9) ausgestattet ist, die so mit mindestens einem der Energiespeicher (8) verbunden ist/sind, dass die eine oder mehreren Photovoltaikzelle/n (9) zumindest den Energiespeicher (8) für den Pitchmotor (7) mit elektrischer Energie versorgen können.

2. Die Windergieanlage (1) nach Anspruch 1,
**dadurch gekennzeichnet,**
**dass** die Photovoltaikzellen (9) an zumindest einer Außenseite (61) zumindest eines der Rotorblätter (6), vorzugsweise an zumindest einer Außenseite (61) jedes der Rotorblätter (6), und/oder an einer von der Gondel (4) wegzeigenden Außenseite der Nabe (5) angeordnet sind.

3. Die Windergieanlage (1) nach Anspruch 2,
**dadurch gekennzeichnet,**
**dass** die Außenseite (61) der Rotorblätter (6) oder der Nabe (5) eine oder mehrere an die Größe und Form der Photovoltaikzelle/n (9) angepassten Aussparungen (62) umfasst, in denen die eine oder mehreren Photovoltaikzellen (9) angeordnet sind; vorzugsweise stellen die Oberflächen der einen oder mehreren Photovoltaikzelle/n (9) im Bereich der Aussparungen (62) die Oberfläche (61 a, 61 b) des Rotorblatts (6) oder der Nabe (5) dar.

4. Die Windenergieanlage (1) nach Anspruch 2 oder 3,
**dadurch gekennzeichnet,**
**dass** das Rotorblatt (6) eine vordere Kante und einen an die Kante anschließenden Flügelbereich (61) zur Erzeugung des Auftriebs umfasst, wobei die ein oder mehreren Photovoltaikzellen (9) in dem Flügelbereich (61) angeordnet sind.

5. Die Windenergieanlage (1) nach Anspruch 4,
**dadurch gekennzeichnet,**
**dass** der Flügelbereich (61) eine erste Oberfläche (61 a) und eine der ersten Oberfläche (61 a) gegenüberliegende zweite Oberfläche (61 b) besitzt, wobei die eine oder mehreren Photovoltaikzelle/n (9) in der ersten und zweiten Oberfläche (61 a, 61 b) angeordnet sind.

6. Die Windenergieanlage (1) nach einem der Ansprüche 2 bis 5,
**dadurch gekennzeichnet,**
**dass** die an der von der Gondel (4) wegzeigenden Außenseite der Nabe (5) angeordneten Photovoltaikzellen (9) symmetrisch um den Drehpunkt der Nabe (5) angeordnet sind.

7. Die Windenergieanlage (1) nach einem der voranstehenden Ansprüche,
**dadurch gekennzeichnet,**
**dass** die Photovoltaikzellen (9) an mindestens einer Außenseite (4a, 4b), vorzugsweise an mindestens zwei in unterschiedliche Richtungen weisenden Außenseiten (4a, 4b), der Gondel (4) angeordnet sind und mit den Energiespeichern (8) für die Pitchmotoren (7) oder mit den Pitchmotoren (7) zumindest im Ruhebetrieb elektrisch verbunden sind.

8. Die Windenergieanlage (1) nach Anspruch 7,
**dadurch gekennzeichnet,**
**dass** die Gondel (4) zumindest in der Nähe der Nabe eine gekrümmte Außenseite (4a, 4b) besitzt und die Photovoltaikzellen (9) in dem vom Erdboden wegzeigenden Bereich der gekrümmten Außenseite (4a, 4b) angeordnet sind.

9. Die Windenergieanlage (1) nach einem der voranstehenden Ansprüche,
**dadurch gekennzeichnet,**
**dass** die Windenergieanlage (1) eine Steuerung (10) für die drehbaren Komponenten (4, 5, 6) umfasst, die so ausgelegt ist, dass die mit einer oder mehreren Photovoltaikzellen (9) ausgestatteten drehbaren Komponenten (4, 5, 6) im Ruhebetrieb der Windkraftenergieanlage (1) in eine Position gebracht (PB) werden, die für eine Erzeugung von elektrischer Energie durch die Photovoltaikzellen (9) besonders günstig ist.

10. Die Windenergieanlage (1) nach einem der Ansprüche 9,
**dadurch gekennzeichnet,**
**dass** die an der von der Gondel (4) wegzeigenden Außenseite der Nabe (5) angeordneten Photovoltaikzellen (5) asymmetrisch um den Drehpunkt (51) der Nabe (5) angeordnet sind.

11. Die Windenergieanlage (1) nach Anspruch 9,
**dadurch gekennzeichnet,**
**dass** die Steuerung (10) der Windenergieanlage (1) so ausgelegt ist, dass die Rotorblätter (6) bei einer mit Photovoltaikzellen (9) ausgestatteten Gondel (4) im Ruhebetrieb in einer Position gestoppt werden, in der die Abschattung der Photovoltaikzellen (9) an der Gondel (4) durch die Rotorblätter (6) minimal ist.

12. Eine Komponente (4, 5, 6) für die Verwendung als drehbare Komponente (4, 5, 6) in einer Windenergieanlage (1) mit Pitchregelung nach Anspruch 1, die mit einer oder mehreren Photovoltaikzelle/n (9) ausgestattet ist, die dazu vorgesehen sind, die Energiespeicher (8) für die Pitchmotoren (7) der Windenergieanlage (1) mit elektrischer Energie zu versorgen.

13. Ein Verfahren zum Betreiben einer Windenergieanlage (1) mit Pitchregelung nach Anspruch 1, umfassend die Schritte
- Aufladen (AW) der Energiespeicher (8) für die Pitchmotoren (7) während des Windbetriebs der Windenergieanlage (1) mittels der durch die Windenergieanlage (1) erzeugten Energie (WE) und/oder durch ein angeschlossenes Stromnetz und/oder mittels der durch die Photovoltaikzellen (9) erzeugten Energie;
- Einstellen eines für den Ruhebetrieb geeigneten Anstellwinkels für jedes Rotorblatt (6) mittels der Pitchmotoren (7);
- Aufladen (AR) von zumindest einem der Energiespeicher (8) für die Pitchmotoren (7) im Ruhebetrieb mittels der durch die Photovoltaikzellen (9) erzeugten Energie; und
- Einstellen eines für den Windbetrieb geeigneten Anstellwinkels für zumindest eines der Rotorblätter (6) durch die Pitchmotoren (7), die mit der nötigen Energie aus den mittels der Photovoltaikzellen (9) aufgeladenen Energiespeichern (8) gespeist werden.

14. Ein Verfahren nach Anspruch 13 umfassend den zusätzlichen Schritt, dass eine Steuerung (10) der Windenergieanlage (1) für die drehbaren Komponenten (4, 5, 6) die mit ein oder mehreren Photovoltaikzellen (9) ausgestatten drehbaren Komponenten (4, 5, 6) im Ruhebetrieb der Windenergieanlage (1) in eine Position bringt (PB), die für eine Erzeugung von elektrischer Energie durch die Photovoltaikzellen (9) besonders günstig ist.

15. Ein Verfahren nach Anspruch 13 oder 14,
**dadurch gekennzeichnet,**
**dass** der Schritt des Aufladens (AR) der Energiespeicher (8) für die Pitchmotoren (7) im Ruhebetrieb bei mehreren Energiespeichern (8) sukzessive für jeden Energiespeicher (8) erfolgt.
